**Europäisches Patentamt**

**European Patent Office**

**Office européen des brevets**

(11) Publication number: **0 481 078 A1**

# EUROPEAN PATENT APPLICATION
## published in accordance with Art. 158(3) EPC

(21) Application number: **90909855.0**

(22) Date of filing: **03.07.90**

(86) International application number:
**PCT/JP90/00860**

(87) International publication number:
**WO 91/00669 (10.01.91 91/02)**

(51) Int. Cl.⁵: **H04N 5/95, H04N 9/89**

(30) Priority: **04.07.89 JP 171153/89**

(43) Date of publication of application:
**22.04.92 Bulletin 92/17**

(84) Designated Contracting States:
**DE FR GB**

(71) Applicant: **YOKOMIZO, Akira**
**Room 201, Sawa Kopo, 288 Kayama**
**Odawara-shi Kanagawa 250-01(JP)**

(72) Inventor: **YOKOMIZO, Akira**
**Room 201 Sawa kopo, 288, Kayama**
**Odawara-shi, Kanagawa 250(JP)**
Inventor: **SATO, Chikahiro**
**3-1-505, Masago 5-chome**
**Chiba-shi, Chiba 260(JP)**

(74) Representative: **Eisenführ, Speiser & Strasse**
**Martinistrasse 24**
**W-2800 Bremen 1(DE)**

(54) **CIRCUIT FOR CORRECTING VIDEO SIGNAL TIME-BASE.**

(57) A signal representing the average phase position of a horizontal synchronizing signal included in a video signal that is added, and another signal representing the phase position of a burst signal whose phase changes depending on change of time-base of the video signal are produced. The time difference between these signals is found by a delay time selecting circuit, and the delay time is changed according to the time difference in order to correct the time-base of the video signal quickly and correctly.

FIG-1

[TECHNICAL FIELD]

This invention relates to a skewless( or jitter free )circuit for the video signal.

[CONVENTIONAL TECHNIQUES]

In VTR, specially for the playback signal by diagonally scanned method always associated with skew( variation of time-axis ) and phase jitter of color sub-carrier by geometrical distortion due to tape materials elasticity, rotator irregularity, tape vertical vibration, and other mechanisms. This is called as time base error or jitter.

In recently, TSC( Television Standards Converter ), TBC( Time Base Corrector ), and FS( Frame Synchronizer ) have been produced by introducing digital processing techniques for TV using high speed A/D converter and high performance IC memory as more cost effective device.

In these system, the major element of its performance is the time to lock, which writing clock needs to be sponteniously locked to the burst signal( 3.58MHz )in the video signal.

For example, basic operation of digital TBC, whose A/D converts with 8-10 bits per sample by the sampling frequency ( 10.74MHz or 14.32MHz ) which is 3 or 4 times of color sub-carrier that is exactly synchronized to the burst signal in VTR playback video signal. For reading from the memory elements, it will get a skewless signal by using stable synchronized signal as read clock. The VCO for writing clock is required a fast tracking feature for the instantaneous locking to the burst phase of input signal.

In the existing television system, this frequency accuracy is about +-10Hz for 3.58MHz, and it is required +-5 of high accurate in phase accuracy.

But in above FS or TBC, in the first skew-correction, for example, it can be met above phase accuracy within +-5 as a specification in the first VTR recording, but in the second skew-correction, this means that the first recorded tape is playbacked and records again by other VTR, therefore already corrected color burst signal by +-5 is again skew-corrected by further +-5 in the second time, the worst case phase accuracy will be degraded to +-10.

This invention resolves the mentioned problem by simple and costless way for the desirable phase accuracy with skewless circuit.

[DISCLOSURE OF THE INVENTION]

This invention relates to a skewless circuit for the video signal which is constructed by the combination of the timing generation circuit whose periodic frequency and phase are almost close to the horizontal sync. pulse detected from the incoming video signal but much stable in frequency stability, the burst separation and amplifier circuit for determining the reference position of the burst signal which is included in the incoming video signal,
the pulse conversion circuit,
the burst polarity discrimination circuit,
the burst position determination circuit,
the measurement command circuit which switches the incoming signal in order into the delay time selection circuit by taking the outputs from the said timing generation circuit and the said burst position determination circuit,
the switch enabling signal generation circuit which stops the switching of the output of the said measurement command circuit when the no burst signal detected from the incoming video signal by taking the outputs of the said burst position determination circuit,
the delay circuit which delays the incoming video signal,
the A/D converter which converts from video analog of the said delay circuit output to digital,
the delay time selection circuit which delays the said A/D converter output by corrected delay value with regard to the outputs from the said measurement command circuit,
the edge detection circuit which detects the corrected delay setting value by monitoring the output of the said delay time selection circuit,
the switch command circuit which commands the selection of the output of the said delay time selection circuit by taking the said edge detection circuit output,
the power on reset circuit which initializes the circuits when the power goes up,
the switch which connects to the D/A converter from the output of the said delay time selection circuit whose delay time setting value is corrected by said switch command circuit output,
and the D/A converter which converts from video digital of the said delay time selection circuit output to analog phase corrected video signal.

By this invention, it is able to get the skewless circuit for the video signal which is not necessary to use standard memory device and also simple with inexpensive structured.

[BRIEF DESCRIPTION OF THE DRAWINGS]

The FIG-1 shows the circuit of the specific embodiment of the invention,
the FIG-2 shows the example for the delay time selection circuit,
the FIG-3 shows the timing chart of the operation,
the FIG-4 shows the example for the timing generation circuit,

the FIG-5 shows the timing chart for the operation of the center position detection phase comparation,

the FIG-6 shows the other example for the delay time selection circuit,

the FIG-7 shows the four field sequence of the NTSC video signal,

the FIG-8 shows the close-up waveform of the NTSC video signal, and,

the FIG-9 shows the close-up timing chart from the FIG-3.

[Detail description of specific embodiments]

Following is the detail description of this invention.

The signal names are as follows for this detail description,

| | |
|---|---|
| VS1 | video signal |
| VS2 | delayed video signal |
| VP | video pulse |
| CP | center pulse |
| CS | set pulse |
| CVS | corrected( skewless ) video signal |
| DVS | digital video signal |
| PWRE1,2 | power on reset signal |
| CH-SYNC | center horizontal sync. signal |
| BT | burst extract signal |
| ZR | zero reset pulse |
| BS | burst signal |
| PBS | pulse burst signal |
| PD | polarity discrimination signal |
| BP | burst detection pulse |
| HBP | half delayed burst detection signal |
| RBP | reference burst pulse |
| A | sub reset pulse |
| G | center point pulse |
| RC | reference clock |
| FEN | enable signal |
| ZP | zero scale pulse |
| DDS1,2 | delay time detection signal |
| DSS | delay selection signal |
| MCK | monitor clock |

(1) VIDEO SIGNAL PROCESSING SYSTEM

In FIG-1, video signal VS1 as an external is input to video input terminal 101 as an input video signal. This video signal VS1 is input to A/D converter through the delay circuit 10, then converts as digital video signal DVS, is input to DATA input terminal of the delay time selection circuit 14/15. After time correction is made by delay time through one of delay time selection circuit 14/15, passes switch 19 which is constructed by analog switch, then after D/A converts back to analog signal, corrected video signal CVS is output to output terminal 103. The 18 is a switch command circuit which determines either 14 or 15 of the delay time selection circuit through the switch 19.

1. Delay time selection circuit

The delay time selection circuit 14/15 are constructed by one clock selection unit and eight data selection units individually. These selection units are basically same structure and its actual circuit is shown in FIG-2. The reset terminal RES and clock input terminal DCK are common terminals for all 9 selection units, but data input terminal DATA is individual for 9 units.

In FIG-2, the delay time selection circuit 14/15 consist of the input signal switch 40 which determine input to the unit either DCK or DATA from input terminal, the delay circuit 41 which is constructed by 3 phase stages of serial connected delay element DL1, DL2 which is made by either delay line or a pair of serial connected inverter, the select switch 42 which is constructed by analog switch connected to said phase stage, the flip flop circuit 43 which is constructed by flip flop FF1 to FF3 whose CK input is connected to said analog switch 42 and preset PR input is connected to input terminal RES, the gating circuit 44 which is constructed by AND gate AND1 to AND3 whose input is connected from /Q output of FF1 to FF3 and the other input is connected from Q output of flip flop of previous phase stage, the position switch 45 which is constructed by analog switch which is turned on by one of the output of AND1 to AND3 which are connected through said select switch 42, and OR gate 46 which switches to opposite direction of the input signal switch 40 and the select switch 42 by the outputs of said AND1 to AND3.

(2) BURST SIGNAL PROCESSING SYSTEM

A skewless circuit of FIG-1 consists of the timing generation circuit 1 for the horizontal sync. signal, the burst separation and amplifier circuit 2 for extracting burst signal BS from video signal VS1, the pulse conversion circuit 3 for generating pulse burst signal PBS from BS, the burst polarity discrimination circuit 4 for generating polarity discrimination signal PD by monitoring start edge of BS, and the burst position determination circuit 5 for generating reference burst pulse RBP by taking PBS and PD. Moreover, said burst separation and amplifier circuit 2 has a frequency filter whose center frequency of pass band is set to 3.58MHz( for example ) and its pass band is very narrow.

1. Burst position determination circuit

The burst position determination circuit 5 consists of the burst detection circuit 6 for generating burst detection pulse BP whose pulse width is about 1nsec to 60usec right after PBS received, the half period delay circuit 7 for generating half delay burst detection pulse HBP whose phase is shifted to half period(180) of BS by taking BP, and the burst position selection circuit 8 for generating reference burst pulse RBP which is selected by PD from either BP or HBP.

One of the delay time selection circuit 14/15 has to be completed to measure the phase error of BS within a period of horizontal sync. signal and prepares for the next cycle. If it can not be completed, then corrected video output signal CVS will be lost and only appears direct current component on the output terminal 103 due to turn off the position switch 45 by stopping flip flop operation of said FF1 to FF3 after releasing the reset. Therefore, the upper limit( 60usec ) of said reference burst pulse RBP should be less than one period of said horizontal sync. signal minus the delay time of the delay circuit 41. Also, the lower limit( 1nsec ) of said RBP is determined by possible operating maximum clock frequency of said FF1 to FF3.

## 2. Switch enabling generation circuit

The 22 is a switch enabling circuit for generating enable signal FEN from /Q output by taking BP to its set terminal into measurement command circuit 9, and when taking power on reset signal PWRE1 to its reset terminal then disappears enabling signal. In addition, this switch enabling circuit 22 has a function which holds the previous delay value of said delay time selection circuit 14/15 when the burst signal BS is not detected.

## 3. Measurement command circuit

Also, skewless circuit has the measurement command circuit 9 which generates zero scale pulse ZP as zero reset pulse ZR into RES terminal of said delay time selection circuit 14 or 15 when the only burst signal BS arrives while the burst extract pulse BT exists with proper switching timing through the AND gate 91 by taking said ZR from the timing generation circuit 1. The back-edge of this ZR acts as a start signal for the measurecent. This measurement command circuit 9 consists of the switching flip flop 95 which switches over ZR and RBP into separated said delay time selection circuit 14/15, the first control gate by the AND gate 91/92, and the second control gate by the AND gate 93/94.

Said switching flip flop is constructed by J-K flip flop with preset PR terminal which is connected from PWRE1 and J-K terminal is connected from FEN of the switch enabling generation circuit 22.

The AND gate 91/92 for the first control gate are connected from Q output of flip flop 95, and the AND gate 91 generates zero scale pulse ZP to RES terminal of said delay time selection circuit 14 as ZR. ZP acts as starting condition of the measurement for said delay time selection circuit 14 right after its disappearance. Also, the AND gate 92 generates reference clock RC to DCK terminal of said delay time selection circuit 14 as RBP. RC acts as starting reference for the time measuring in said delay time selection circuit 14. Therefore, said delay time selection circuit 14 starts to measure the delay time by taking two conditions which are releasing of said ZP and RC.

On the other hand, the AND gate 93/94 are connected from /Q output of said flip flop 95, and basically the same function of said AND gate 91/92 for said delay time selection circuit 15, which ZP and RC are two conditions for starting the delay time measurement.

## (3) TIMING GENERATION CIRCUIT

In FIG-4, it shows the structure of the timing generation circuit in terms of said horizontal sync. signal, which consists of the comparator 25, the voltage controlled oscillator 27, the phase comparator 28, the low pass filter 29, the set pulse generation circuit 30, the narrow pulse width detection circuit 31, the wide pulse width detection circuit 32, the center position generation circuit 33, the center position synchronization pulse generation circuit 34, the burst extracting pulse generation circuit 35, the delayed burst extracting pulse generation circuit 36, the gating plus generation circuit 37, and the resetting sub circuit 24.

## 1. Comparator

The said comparator 25 generates a video pulse VP by comparing VS1 and setting value 26 whose level is between peak level and pedestal level of the horizontal sync., and if VS1 is larger than setting value then VP goes high, and if VS1 is smaller than it then VP goes low. The said VCO 27 generates monitoring clock MCX whose center frequency is more than 3 times higher of the center frequency of the burst signal( for example, 14.32MHz ). The said setting pulse generation circuit 30 generates the set pulse CS whose pulse width is narrow by differentiated of the front-edge of VP.

## 2. Narrow width 31 and wide width 32 detection circuits

The said narrow width detection circuit 31 generates the narrow width detection pulse NP when the pulse width of VP is narrower than the horizontal sync. pulse by monitoring VP within the minimum pulse width of the horizontal sync. pulse( for example, 4.4 usec )after CS is received. In a diction, the said narrow width detection circuit 31 will activate the said wide width detection circuit 32 when the width of VP is exceeded from the minimum width of the horizontal sync. pulse. The said wide width detection circuit 32 generates the wide width detection pulse WP when the pulse width of VP is wider than the horizontal sync. pulse by monitoring VP within the maximum pulse width of the horizontal sync. pulse( for example, 5.1 usec )after CS is received.

## 3. Center position generation circuit

The said center position generation circuit 33 generates the center pulse CP at the center position of the horizontal sync. pulse as a continuous signal output when only the pulse width of VP is within specification of the horizontal sync. pulse by taking the output of said reset sub circuit 241, CS, and MCK. But, when NP from said narrow width detection circuit 31 or WP from said wide width detection circuit 32 is input into the AND gate 24 through the OR gate 38 in a control of the sampling p period generation circuit 39, then CP is turned off. By taking new CS, then CP is ready for next cycle at the center position of the horizontal sync. pulse as a continuous signal output.

## 4. Sampling period generation circuit

The said sampling period generation circuit 39 generates the time width whose values is greater than the maximum width of the horizontal sync. pulse and within few period of the horizontal sync. signal, by counting MCK from said VCO after CS is received and PWRE1 is released. This time width signal is input to the AND gate 24 which determines either pass through the output of OR gate 38 or not. This is because that said video pulse VP is not always the horizontal sync. pulse, sometimes received as narrower pulse or wider pulse of vertical pulse after horizontal one, this circuit can eliminate these pulses against the operation error.

## 5. Center position synchronized pulse generation circuit

The said center position synchronized pulse generation circuit 34 generates the rH-SYNC with the same cyclic period of the horizontal sync. signal with 50% duty ratio from the center position of the first incoming horizontal sync. pulse by taking the output of said reset sub circuit 241, CP from said center position generation circuit 33, and MCK after releasing the power on reset signal. The phase comparator 28 which is constructed by excluisve-OR compares between VP and CH-SYNC in phase and its phase comparison output goes into said VCO 27 through said low pass filter 29. By this process, CH-SYNC cyclic period is coincident with the horizontal sync. signal and the front-edge of said CH-SYNC is also coincident with the center position of the horizontal sync. pulse. The reason this invention took 50% duty ratio of the CH-SYNC is that the phase error output of said phase comparator 28 is maximized in order to improve frequency response of said VCO 27. Therefore, for the other purpose, the duty ratio of the CH-SYNC is not always necessary as 50%.

## 6. Pulse generation circuit

The said burst extracting pulse generation circuit 35, said delayed burst extracting pulse generation circuit 36, and said gating pulse generation circuit 37 are logic circuits for generating the burst extracting pulse BT, the zero reset pulse ZR, and the center point pulse G respectively by taking counter bit outputs from said center position synchronized pulse generation circuit 34.

[ Detail description of the operations ]

Following sections describe the detail operation of said skewless circuit by using FIG-3 and FIG-9 as references.

<1> Initial condition setting

Once the power up( z-point ), PWRE1 and PWRE2 of power on reset circuit 21 are asserted and these signal make all the circuit reset including said delay time selection circuit 14/15, said timing generation circuit 1, said switching flip flop 95 in said measurement command circuit 9, said switch enabling generation circuit 22, and said switching command circuit 18.

1. PWRE1

a: Delay time selection circuit 14, 15

First of all, PWRE1( first power on reset signal, active high ) presets the internal flip flop FF1 to FF3( FIG-2 ) of said delay time selection circuit 14/15 by inputting its reset terminal RES through the OR gate 12/13.

In this result, /Q outputs of FF1 to FF3 go low and the outputs of AND1 to AND3 keep low, then position switch 45 is turned off. Therefore, the line from data input DATA or input DCK to DVS1 of all 9 selection units of said delay time selection circuit 14( DVS2 for said delay time selection circuit 15 )is turned off, DVS by A/D converted from DVS2 can not reach at the switch 19. Therefore, the output of D/A converter 20 is only direct current component and is not output the remarked one as CVS. In conclusion, during the power on reset is active, corrected video signal CVS is not output and only PWRE1 is applied to said delay time selection circuit 14/15.

On the other hand, in the input signal switch 40 and the select array switch 42, said switch 40 switches to DCK( shown in FIG-2 ) and said select array switch 42 switches to FF1 to FF3 by taking low level output of the OR gate 46 when /Q outputs of FF1 to FF3 are all low and the outputs of AND1 to AND3 keep all low. Therefore, reference clock RC( mainly reference burst pulse RBP )is applied into DCK terminal of said delay time selection circuit 14/15, and also is applied into CK terminal of FF1 to FF3 through said delay circuit 41.

b: Switching flip flop 95

When the switching flip flop 95 of said measurement command circuit 9 resets, its Q output is high and /Q output is low, then opens the AND gate 91/92 and closes the AND gate 93/94. By this operation, in said delay time selection circuit 14, ZR is input to its preset PR through the AND gate 91 and RC is input to its DCK through the AND gate 92.

But, in said delay time selection circuit 15, ZR and RC are not passed by the AND gate 93/94, respectively.

c: Switch enabling generation circuit 22

When the flip flop of said switch enabling generation circuit 22 resets, the CK input of said switch flip flop 95 is disabled by taking FEN as an output of /Q of said switch enabling generation circuit 22 to J-K input of said switching flip flop 95.

d: Switch command circuit 18

When the flip flop of said switch command circuit 18 resets, switch 19 switches to said delay time selection circuit 15 by the delay selection signal DSS as its /Q output.

e: Others

All the outputs of the timing generation circuit 1, MCK, ZR, BT, G, and A are reset to low. The flip flop 331/332 are reset by PWRE1 in FIG-4. The set terminal of flip flop 331 is waiting mode for the output of the differentiated circuit 30 where the detection pulse of the front-edge of video pulse VP is generated. Also, in the flip flop 341 is waiting mode for the center pulse CP which determines the center position of the horizontal sync. pulse from the center position signal generation circuit 33 after receives the front-edge of video pulse VP. In addition, PWRE1 is applied to the said sampling period generation circuit 39, and resets its internal counter.

2. PWRE2

The PWRE2( active low )as the second power on reset signal from said power on reset circuit 21, the AND gate 92 of said measurement command circuit 9 is disabled and the DCK input of said delay time selection circuit 14 is set to low. This low level is transferred to all way through the said delay circuit 41 by the switch 40. In other words, the pulse width of PWRE2 low level should have at least the total delay time of said delay circuit 41. In the same manner, the /Q output of said switching flip flop 95 is set to low, and all delay elements of said delay time selection circuit 15 are set to low. Therefore, PWRE1 also needs to have a minimum pulse width of high-level.

During the assertion of PWRE1( maintaining high )to the timing generation circuit 1, BS is not generated due to non existing burst extract signal BT. Therefore, during this period, reference clock is not generated due to non existing reference, burst pulse RBP and DCK terminal is set to high all the time. (reference clock never goes into DCK terminal ) By this reason, PWRE2 is not always absolutely necessary.

3. Summary

In conclusion, during power on reset, the input signal switch 40 is set to DCK side, the select switch array 42 is set to CK side of FF1 to FF3, the position switch array 45 is turned off, and therefore said delay time selection circuit 14 states as DCK input mode after receiving and releasing its preset PR.

<2> Operation of the timing generation circuit

1. Generation of set pulse CS

When the horizontal sync. pulse is coming (at b-point), the video pulse VP( whose high level corresponds to the lower level of the video signal VS1 compared with the setting level 26 which is a level between sync. chip level and its pedestal level )is generated by the comparator 25 of the timing generation circuit 1. At b-point in FIG-9, the horizontal sync. signal already reached, and generates a falling edge transition of VP by the horizontal sync. front-edge. This VP goes into D type flip flop 312/324 of said narrow width detection circuit 31 and said wide width detection circuit 32 respectively, and to the input of the phase comparator 28. The CS is generated by this VP at the differentiated circuit 30 with its front-edge. This CS sets to the flip flop 311/314 of said narrow width detection circuit 31, D type flip flop 324 of said wide width detection circuit 32, the flip flop 331 of said center position generation circuit 33.

By this result, the counter 315 of said narrow width detection circuit 31 is able to start counting for the monitoring clock MCK from the said VCO. The output of the counter 315 is low until its time up. The Q terminal of the D type flip flop 312 outputs its D input( as VP )sampling by the every rising edge of MCK.

2. Center position Generation( at c-point )

In the center position generation circuit 33, once the flip flop 331 is set then the flip flop 333 is set through the differentiated circuit 332 by its output, therefore counter 334 is ready to count. The counter 334 starts to count up to its setting value by the first incoming MCK and when it reaches the setting value then its output goes high. This setting value for this example is 30 counts in order to correspond the virtual center position of the pulse width of the horizontal sync. pulse.

When the incoming pulse whose width is longer than that of the length from the front-edge of the horizontal sync. pulse to the virtual center position, then the output of the counter 334 changes to high level at the virtual center position of the said horizontal sync. pulse. The counter 334 again resets by taking signal from flip flop 333 through the inverter 335. Therefore, the output of the counter 334 goes low and the output of the inverter 335 goes high. By this action, center pulse CP is generated from the inverter 335 as a single pulse. This CP indicates the virtual center position of the pulse width of the horizontal sync. pulse.

By generating this CP, the flip flop 341 of the center position synchronization pulse generation circuit 34 is set, and releasing the reset of the counter 342 and the divider 343, and opens the AND gate 344. By applying the output of the flip flop 341 to enable terminal of the phase comparator 28, then starts to phase compare between the output of the AND gate 344 and the video pulse VP. Also, starts to operate the counter 342 and the divider 343, then the center horizontal sync. pulse CH-SYNC goes high as an output of the AND gate 344.

This CH-SYNC goes high at c-point and goes low at where the virtual center position (about 31.75usec) between current c-point and next c-point of the horizontal sync. pulse. It is generated at the every virtual center position of the horizontal sync. pulse, and the phase comparator generates its output as exclusive-OR logic shown in FIG-5. By passing this output into the low pass filter 29, the logic output is averaged by the low pass filter29 in time. In result, the direct current output whose level is a half of full logic L1L from the low pass filter is generated.

3. Generation of the timing signal( c and g points )

The burst extract signal BT( about 7usec )from the burst extract pulse generation circuit 35 and the center point pulse G( about 1usec )from the gating pulse generation circuit 37 are output at c-point. Also, the fixed zero reset pulse ZR (about 7usec) from the delayed burst extract pulse generation circuit 36 at g-point in FIG-9, where the falling edge of G is occurred with fixed delay timing (about 1usec) from c-point. The most important factor is that the position of back-edge of the zero reset pulse ZR is fixed with regard to c-point, but no importance of the position variation of both BT and the back-edge of G at g-point in FIG-9. Therefore, these BT and G are able to make by one-shot pulse generation circuit.

4. Narrow width detection( d-point )

The counter 315 starts its count at b-point up to the setting value( for example, 60 counts ), then its output goes high at d-point and closes the NAND gate 313. Therefore, the output of the NAND gate 313 is either kept high during VP stays low or changed to low when VP goes high during the counter 315 operates. In other words, if the pulse width of VP is less than the counter 315 setting pulse width, then the narrow width detection pulse NP is output from the NAND gate 313. But for the correct horizontal sync. pulse in FIG-9, NP is not output.

5. The back-edge of the horizontal sync. pulse( e-point )

After that, the back-edge of the horizontal sync. pulse arrives at e-point.

6. Wide width detection( f-point )

The output of the said counter 315 is serially connected to the counter 322 of the wide width detection circuit 32 through the inverter 317. This counter 322 is set by the carry out pulse from the counter 315 whose counts reached its setting value( 60 counts ), then starts to count on MCK. When the count reaches 16( in this example ), the output of the counter 322 goes high and simultaneously samples the video pulse VP at f-point by D type flip flop 324 through the inverter 323. The wide width detection pulse WP is generated when the pulse width of VP is greater than the upper setting value of the counter 322 with the condition that VP is not recognized as narrow width by the narrow width detection circuit 31.

In this result, though VP is only read at f-point in FIG-7, but in basically it equivalents to sample VP in between b-point and f-point. In this example, in FIG-9, due to the back-edge of the horizontal sync. pulse already reached at e-point, therefore WP is not generated. In above description, NP and WP are not generated, therefore VP is recognized as the horizontal sync. pulse in most possible probability.

## 7. Burst signal arrives( h-point )

Right after the back-edge( e-point )of the horizontal sync. pulse, the burst signal BS in video signal is appeared. This BS is extracted by BT and only has its best contents( h-point ).

## 8. Burst extract pulse ends( m-point )

The burst extract pulse BT is ended at m-point where the some delays added to l-point where the counter 342 counts about 100 as its setting value.

## 9. Delay burst extract pulse ends( n-point )

The delay burst extract pulse( similar to ZR ) is ended at n-point where about 10 more counts of the counter 342 from m-point.

## <3> Summary of the operation of the timing generation circuit

## 1. Judgment for the horizontal sync. pulse

Incoming horizontal sync. pulse is judged by measuring its pulse width as a correct horizontal sync. pulse width. There are many other different pulses from the horizontal sync. pulse such as equivalent pulse and vertical sync. pulse within the incoming horizontal sync. pulses VS1, therefore the each pulse width of which is consisted as VS1 is not constant. The equivalent pulse is narrow( 0.04H ) and the vertical sync. pulse is wide( 0.43H ). If the first incoming pulse is the horizontal sync. pulse, then system is no problem, but if the first incoming pulse is either the equivalent pulse or the vertical one, then the system operation is wrong if the system recognizes it as the horizontal sync. pulse. For example, in FIG-7, when the first incoming signal as a last equivalent pulse within the last half period of the equivalent pulse in the color field-I arrives, though the center sync. pulse CH-SYNC( 31.75usec )with 50% duty ratio of the divided MCK from the VCO of the timing generation circuit is generated, by appearing the rising edge of CH-SYNC in the period of picture signal, the wrong reference clock RC is also generated by starting the burst position determination circuit 5 with the same frequency component of the burst signal which is generated by the burst extract pulse at where CH-SYNC goes high. By this wrong RC, the wrong correction delay timing is set into the delay time selection circuit 14. Therefore, the digital video signal DVS through the A/D converter 11 is not phase corrected by the delay time selection circuit 14 and is output with much larger phase error in it. In addition, for the video signal, there is a chance to add the noise whose level is the same as the horizontal sync. pulse. For correcting all above errors, when the first incoming pulse with the setting width arrives, it generates CH-SYNC( 31.75usec ), and check the setting pulse is sustained and disappeared after CH-SYNC generation.

## 2. Generation of the timing signal

If the correct horizontal sync. pulse is detected, then CH-SYNC, BT, G, ZR, and MCK from VCO are all generated with the correct setting timing.

## <4> Video signal processing system

## 1. The delay of the video signal

The delay circuit 10 delays the certain amount of the delay associated with the switching from the input signal switch 40, the select switch array 42, the position switch array 45 within the delay time selection circuit 14/15. It eliminates any bad effects for the picture signal and the burst signal associated with the switching. The actual delay time of the delay circuit 10 is the time distance from the virtual center position of the horizontal sync. pulse (c-point) to the completion point of the zero reset pulse ZR. The video signal VS1 is delayed above delay time by the delay circuit 10 and the VS2 is applied to the A/D converter 11.

## 2. A/D converter

The A/D converter 11 converts digital video signal DVS from VS2 by MCK whose frequency is 4 times higher of the burst signal. This DVS is applied to the each DATA terminal of the nine selection units in the delay time selection circuit 14/15. But, right after the power on reset, DVS is not able to pass the delay time selection circuit 14/15 by turning off the position array switch 45, therefore the output of the D/A converter 20 as corrected video signal CVS has the only direct current component.

<5> Burst signal processing system

1. Determination of the virtual center position of the horizontal sync. pulse

The horizontal sync. pulse VS1 is applied at b-point and keeps its level to the center position. ( c-point in FIG-3 or FIG-9 )

The comparator 25 of the timing generation circuit 1 checks the level of VS1 and its output pulse width is monitored by the narrow width detection circuit 31. In FIG-3 or FIG-9, the low level of VP keeps to e-point where over d-point and c-point, in the result, the c-point is determined as the virtual center position of the horizontal sync. pulse. In the timing generation circuit 1 whose VCO output already enables, generates the high level of CH-SYNC( 31.75usec )by taking 50% duty ratio from divided MCK, BT( 7usec ), and G( 1usec ). Also, the said timing generation circuit 1 generates ZR at g-point where little bit after from c-point shown in FIG-9.

2. Initial operation of the measurement command circuit

The center point pulse G is output to the CK input of the switching flip flop 95, the reset input of the switch enable generation circuit 22, and the burst detection circuit 6 in the burst position determination circuit 5. But, due to the reset by PWRE1 at the switch enable generation circuit 22, then even in the input of the center point pulse G, the output of the switch enable generation circuit 22 can not change. In addition, for the switching flip flop 95, its J-K input is low, then its output can not change even in the center point pulse G is input to CK input terminal of the switching flip flop 95. Therefore, the corrected video signal CVS on the output terminal 103 is not appeared during the power on reset mode.

3. Extraction of the burst signal

The center point pulse G resets the internal counter of the burst detection circuit 6 in the burst position determination circuit 5, then said internal counter is standby mode for the pulse burst signal PBS from the pulse conversion circuit 3. Then BT is generated at c-point of the center position of the horizontal sync. signal, and is applied to the burst separation and amplifier circuit 2 and the burst polarity discrimination circuit 4.

4. Determination of the burst position

When the burst extract pulse BT is applied to the burst separation and amplifier circuit 2, the burst signal BS is extracted from the video signal VS which has narrow frequency component whose center frequency is 3.58MHz on the back porch as a burst signal component, then it is applied to the pulse conversion circuit 3 and the burst polarity discrimination circuit 4. The BS is converted as the pulse burst signal PBS in the pulse conversion circuit 3, and is applied to the burst detection circuit 6, then is generated the burst detection pulse BP by counting PBS up to its setting value. The burst detection pulse BP is applied to the half period delay circuit 7, and is generated the half delay burst detection pulse HBP whose phase is delayed by half period( 180 )of the burst signal and is applied to the burst position selection circuit 8.

The burst position selection circuit 8 generates either reference clock RC from BP( PD = high level )or HBP( PD = low level )by taking the polarity discrimination signal PD from the burst polarity discrimination circuit 4. The burst polarity discrimination circuit 4 generates PD whose level is determined by the zero loss transition of the burst signal BS which is generated from the burst separation and amplifier circuit 2, PD is high level when the transition goes from negative to positive and PD is low level when the transition goes from positive to negative.

Therefore, the burst position selection circuit 8 selects as its output either BP( BS goes positive polarity )or HBP( BS goes negative polarity ). The reference burst pulse RBP generated from the burst position selection circuit 8 is applied to the DCK terminal of the delay time selection circuit 14/15 as the reference clock RC through the AND gate 92/94.

5. Preparation for the measurement( Preset )

The timing circuit 1 generates the zero reset pulse ZR at g-point in FIG-9 whose timing is slightly delayed from said c-point. This ZR is applied to the RES terminal of the delay time selection circuit 1r as the zero scale pulse ZP through the AND gate 91 and the OR gate 12. It presets the flip flop FF1 to FF3 of the 9 selection units in the delay time selection circuit 14.

6. Start measurement

During said presetting period, the reference clock RC as an output of the AND gate 92 is applied to the DCK terminal of the delay time selection circuit 14. In FIG-2, the incoming reference clock RC goes through the delay element DL1 of the delay circuit 41 and the select switch array 42 by the input signal switch 40 whose position is set at DCK side. The incoming reference clock RC is applied to the CK terminal of FF1 to FF3 through the input signal switch 40 by the select switch array 42 whose position is set at input terminal CK side. But, for FF1 to FF3, when the reference clock is applied to the first FF1, the preset is not released yet.

The start of the delay time selection operation f the delay time selection circuit 14 begins its measurement by releasing the preset at the back-edge of zero scale pulse ZP as a start signal.

The relation between preset releasing and the falling edge of the reference clock RC is set that for the skewless (normal) video signal VS1 is in the terminal 101, the falling edge of the reference clock RC is appeared at the middle point of the delay circuit 41, in this example, the timing arriving on the CK terminal of FF2 is just after the back-edge of ZP arrived. In this method, the zero scale point as a reference of the delay time measurement is set to the center position of the prepared delay elements, then the actual incoming RC which slightly different timing shift from the center can be measured.

7. Measurement operation

In the first place, said ZP resets the FF1 to FF3. The pulse signal which started before the reset in the delay circuit 41 are all passed by this reset. But, the reference clock RC only stays in the delay circuit 41 during the reset by ZP. When ZP is applied, Q outputs of every flip flop are remained high and /Q outputs are all low. Therefore, the outputs of AND1 to AND3 of the gating circuit 44 are all low and switch 451 to 453 of the position switch array 45 remains turning off. Also, the output of the OR1 remains at low, then the input signal switch 40 is kept to set at DCK side and the switch array 42 is kept to set at input terminal CK side of the each flip flop.

If the back-edge of the reference clock RC is appeared at the center point terminal 411 of the delay circuit 41 after releasing the preset, then it is equivalent to define that the skewless normal video signal VS1 is applied to the terminal 101. If the back-edge of the reference clock RC is in advanced from the center point terminal 411 through the delay element DL1, then it is equivalent to define that the video signal VS1 has short time interval from the normal one. In other words, the period of the cyclic horizontal sync. pulse is shorter. In opposite way, the back-edge of the reference clock RC is behind from the center point terminal 411 and can not pass the delay element DL1, then it is equivalent to define that the video signal VS1 has long time interval from the normal one. In other words, the period of the cyclic horizontal sync. pulse is longer.

a: Normal case

In the case of the normal skewless video signal VS1, the back-edge of the reference clock RC is appeared at the center point terminal 411 in the delay circuit 41 after releasing the preset, and it reaches at CK terminal of FF2. After this, the back-edge of RC is appeared at the last stage terminal 412 in the delay circuit 41 and reaches at CK terminal of FF3. Therefore, only FF2 and FF3 are flipped and FF1 is not flipped all the time. In this result, Q output is high and /Q output is low in FF1, and Q output is low and /Q output is high in FF2 and FF3.

In AND1 to AND3 which are belongs to the said FF1 to FF3, one input connects from /Q output and the other input connects from Q output which is located in one previous stage, therefore, the output of AND2 only goes high among AND1 to AND3. By this output of AND2, the position switch 452 is turned on. When one of the outputs of AND1 to AND3 goes high, then the input signal switch 40 is changed from DCK side to DATA side and the select switch 42 is set to the position switch array 45. In conclusion, the digital video signal DVS from the A/D converter 11 is output as DVS1 from the position switch 452 through the input signal switch 40, the delay element DL1, the terminal 411, and the select switch array 42 in FIG-2. DVS1 is again converts as corrected video signal CVS by D/A converter 20 through the switch 19 and is output from the terminal 103 in FIG-1.

b: Advance case

When releasing the preset, the back-edge of the reference clock RC is in advance from the center point of terminal 411, only FF3 is flipped and FF1, FF2 are not flipped. In this result, Q output is high and /Q output is low in FF1 and FF2, Q output is low and /Q output is high in FF3. The output of AND3 only goes high among AND1 to AND3. The position switch 453 is turned on by AND3, then the input signal switch 40 is set to DATA side and the select switch array 42 is set to the position switch array 45 side through the OR gate 46. Therefore, the digital video signal DVS from the A/D converter 11 passes the input signal switch 40, the delay element DL1, DL2, the terminal 412, the select switch array 42, and the position switch 453 in FIG-2, it is output to the terminal 103 as the corrected video signal CVS through the switch 19 and the D/A converter 20 in FIG-1.

c: Behind case

When releasing the preset, the back-edge of the reference clock RC is behind from the center point terminal 411, only FF1 is flipped and FF2, FF3 are not flipped. The output of AND1 only goes high among AND1 to AND3. The position switch 451 is turned on by AND1, then the switch 40/42 switch through the OR gate 46, the digital video signal DVS passes the input signal switch 40, the terminal 410, the select switch array 42, and the position switch 453, it is output to the terminal 103 as the corrected video signal CVS through the switch 19 and the D/A converter 20 in FIG-1.

It is better to consider the number of phase stage and the delay value for covering the estimated skew variation of the horizontal sync. pulse. In the case of the maximum variation of the horizontal sync. pulse, the back-edge( falling edge )of the reference clock RC should be within the delay line after releasing the preset. The preset releasing timing is set with an arbitrary condition of wherever the back-edge of the reference clock RC is on the delay line. In conclusion, the most important factor is that there are flipped FF and non flipped FF within the phase stages.

<6> Preparation for the next burst signal

After generating the center pulse CP from the timing generation circuit 1, the output of inverter 335 is not able to go low again without having power on reset PWRE1 and the set pulse CS at the same time. Because of the only set pulse CS arrives at the counter 334, the counting is not started due to the counter is in clear mode, then the only one center pulse CP is generated. Also, this center pulse CP is only generated when the first incoming VP is recognized as the normal horizontal sync. pulse right after power on reset released.

At this time, the /Q output of the switch enable generation circuit 22 is still low even having the center point pulse G from the timing generation circuit 1. Then the burst detection pulse BPS is coming from the burst detection circuit 6, said /Q output goes high. Therefore, the J-K input terminal of the switching flip flop 95 changes to high, and waits for the center point pulse G.

<7> Coming next burst signal

The second horizontal sync. pulse is coming and arriving at the center position.
{1} The center point pulse G and the zero reset pulse ZR for presetting the delay time selection circuit 14/15 should not output at the same time. Because, when the zero reset pulse ZR is coming at the same time of the center point pulse G, then ZR passes the AND gate 91 prior to the FF-1 flipping by the center point pulse G. In the result of this happening, the unexpected delay time selection circuit 14 is preset and the screen display is disappeared.
{2} The burst extract pulse BT is generated at the center position of the horizontal sync. signal, and the burst signal is extracted from the burst separation and amplifier circuit 2. Also, the center point pulse G is generated at the rising edge of BT. By the burst signal BS following after the first horizontal sync. pulse, the FEN( the output of FF-2 )goes high by taking the burst detection pulse BP. The J-K terminal of FF-1 is set high and its outputs are flipped, also the center point pulse G is applied to the FF-2 of the switch enable generation circuit 22 and its output FEN flipped again from high to low. This causes that the Q output of FF-1 is flipped to high.
{3} After the FF-1 selects AND-3 and AND-4 by changing the center point pulse G from high to low, then incoming zero reset pulse ZR passes AND-3 and is applied to the RES terminal of the delay time selection circuit 15 as high level which presets all internal flip flops( FF1t to FF3 )within the delay time selection circuit 15.
{4} The input signal switch 40 is set at DCK side and the position switch array are all turned off in the delay time selection circuit 15. The output level of the individual delay element DL keeps as low level, therefore all flip flops are not ready to be flipped.
{5} If the pulse burst signal PBS is not detected by the burst extract pulse BT and the pulse conversion circuit 3, then the output of FF-2 of the switch enable circuit can not be flipped and FF-1 is not flipped by the following center point pulse G.
{6} If the pulse burst signal PBS is detected by the burst extract pulse BT, then the reference clock RC is applied to the delay time selection circuit 15, therefore low to high transition occurs in the delay circuit 41 of the delay time selection circuit 15.
{7} By said {6}, FF1 to FF3 of the delay time selection circuit 15 is flipped in serially, and it is very difficult to identify the position of the reference clock RC in the delay line. In order to avoid this, the width( kept high level )of the zero reset pulse ZR should be slightly longer than the longest time when the reference clock RC is appeared after the output of FF-1 is flipped by the center point pulse G.

In consideration regarding no affects for the monitor display with the horizontal sync. pulse width variation, this invention proceed to make correction for the jitter within said horizontal sync.

pulse width. In other words, it equivalents to absorb as the horizontal sync. pulse width variation for the skew( or jitter )correction. In actual method, the jitter variation of the video signal in every cycle is corrected within the horizontal sync. pulse period, when the processing of the video signal is longer then makes the horizontal sync. pulse width shorter or when the video signal is shorter then makes the horizontal sync. pulse width longer as the skew( or jitter )correction. In the period without the horizontal sync. pulse, the period when the picture signal or the burst signal exists in the video signal, makes no correction for these signals and just passed.

FIG-6 shows other example for the delay time election circuit.

The different points from FIG-2 are taking out he select switch 42 and replacing the position switch array by logic circuit consists of AND gate and OR gate. It has the same function, but switching speed is faster and simplify the circuit structure which is quite suitable for the integrated circuit realization.

In FIG-6, it is possible to eliminate the area from the output of the NOR gate 38 to the input terminal of the NOR gate 241. By eliminating this, the cyclic period of CH-SYNC is getting stable, therefore the correction of the delay time also is stable.

The switch 19 as an analog switch in FIG-1 can be replaced by the input signal switch 40 in FIG-6. In this case, the DCK terminal, the DATA terminal, the third input terminal, and the output terminal of the input signal switch 40 in FIG-6 correspond to the DVS1 terminal, the DVS2 terminal, the DSS terminal, and the CDDS terminal in FIG-1 respectively.

In this example, the delay time selection circuit 14/15 are used, but for the small variation of the skew, it is possible to take one out of them.

[PROVABILITY OF THE INDUSTRIAL APPLICATION]

This invention is used for the delay time selection circuit for the input video signal from the TV camera or VTR. And, this invention is used for the decoder circuit for disc drive mechanism such as floppy disc drive mechanism.

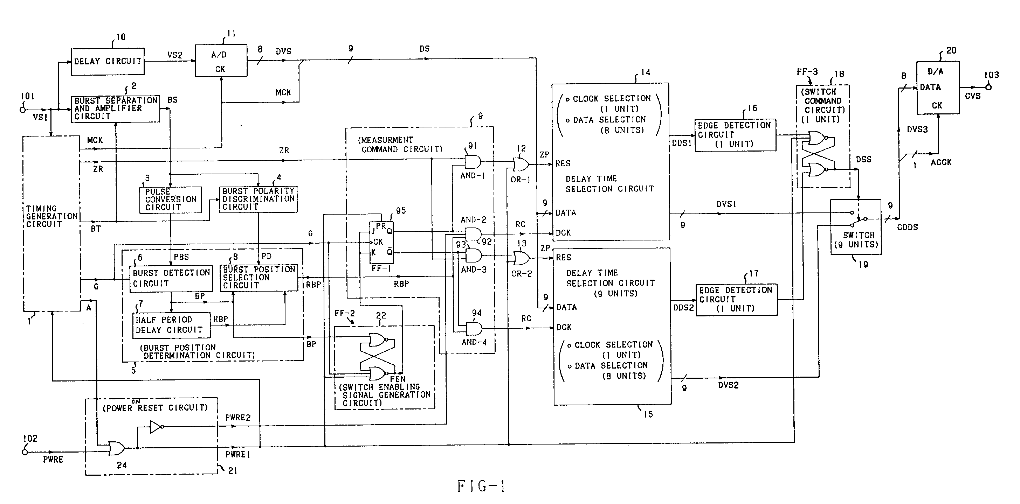

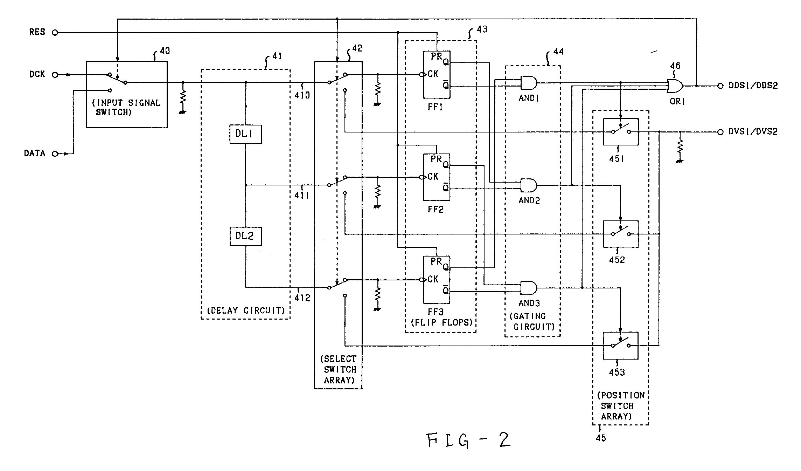

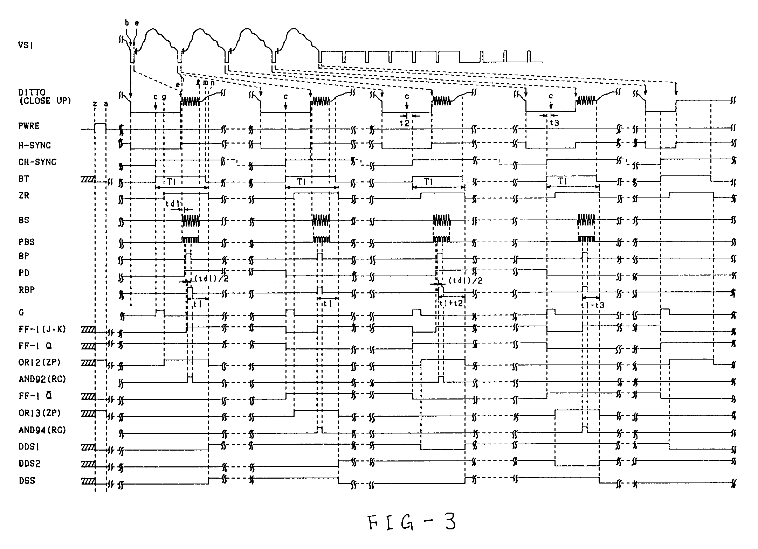

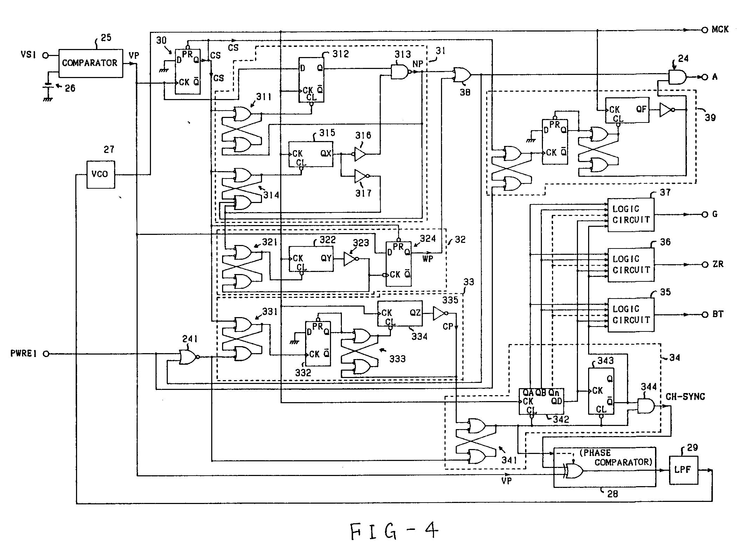

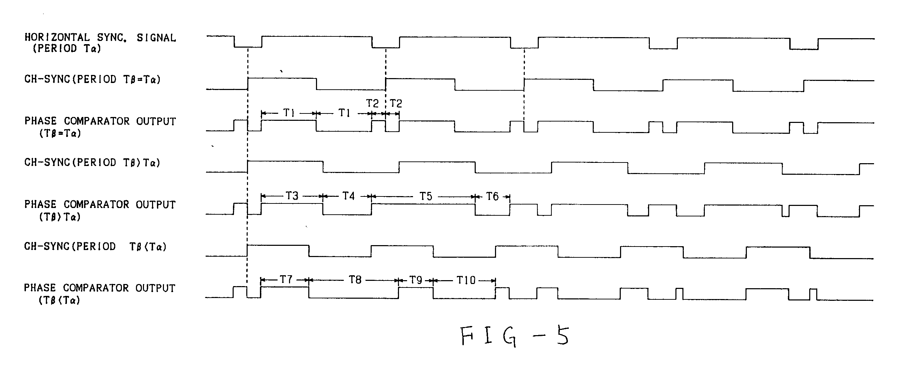

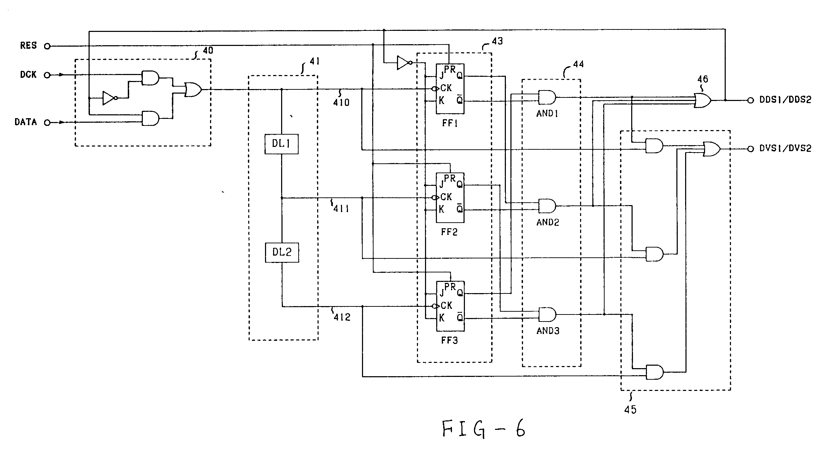

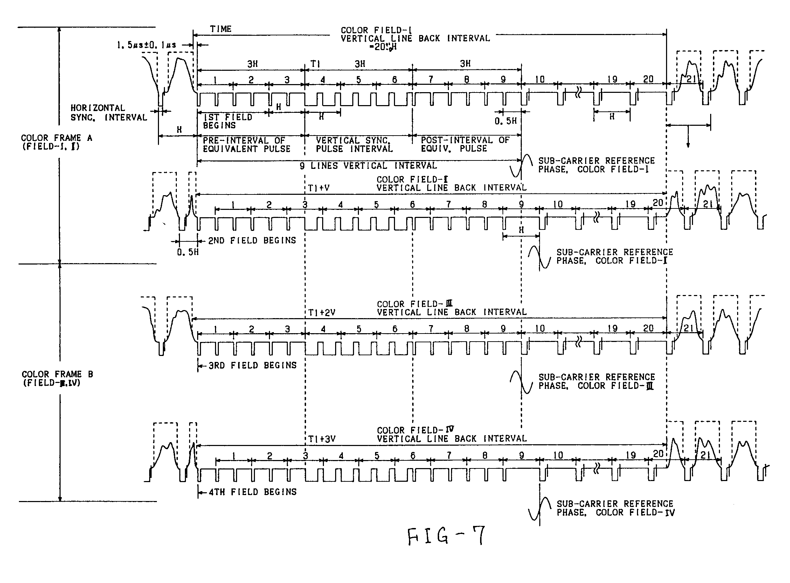

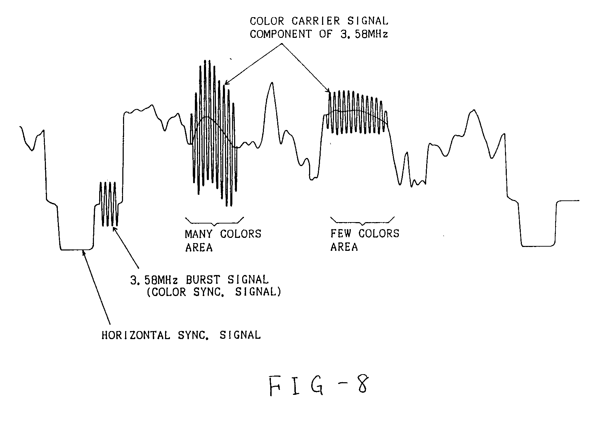

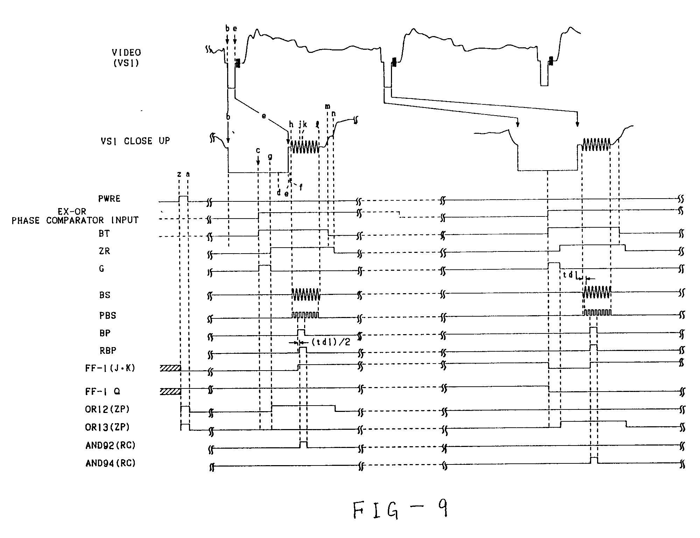

## Claims

**1.** A skewless circuit for the video signal, whose output is phase corrected by using delay time selection circuit for the input video signal.

FIG-1

FIG - 2

EP 0 481 078 A1

FIG - 3

EP 0 481 078 A1

FIG-4

HORIZONTAL SYNC. SIGNAL
(PERIOD Tα)

CH-SYNC(PERIOD Tβ=Tα)

PHASE COMPARATOR OUTPUT
(Tβ=Tα)

T1 ⟵⟶ T1 T2 ¦ T2

CH-SYNC(PERIOD Tβ)Tα)

PHASE COMPARATOR OUTPUT
(Tβ)Tα)

T3 ⟶ T4 ⟶ T5 ⟶ T6

CH-SYNC(PERIOD Tβ(Tα)

PHASE COMPARATOR OUTPUT
(Tβ(Tα)

T7 ⟶ T8 ⟶ T9 ⟶ T10

FIG - 5

FIG - 6

EP 0 481 078 A1

FIG-7

COLOR CARRIER SIGNAL
COMPONENT OF 3.58MHz

FEW COLORS
AREA

MANY COLORS
AREA

3.58MHz BURST SIGNAL
(COLOR SYNC. SIGNAL)

HORIZONTAL SYNC. SIGNAL

FIG - 8

FIG - 9

VIDEO
(VS1)

VS1 CLOSE UP

PWRE
EX-OR
PHASE COMPARATOR INPUT

BT

ZR

G

BS

PBS

BP

RBP

FF-1 (J·K)

FF-1 Q

OR12 (ZP)

OR13 (ZP)

AND92 (RC)

AND94 (RC)

# INTERNATIONAL SEARCH REPORT

International Application No  PCT/JP90/00860

**I. CLASSIFICATION OF SUBJECT MATTER** (if several classification symbols apply, indicate all) [6]

According to International Patent Classification (IPC) or to both National Classification and IPC

Int. Cl[5]     H04N5/95, H04N9/89

**II. FIELDS SEARCHED**

| Minimum Documentation Searched [7] | |
|---|---|
| Classification System | Classification Symbols |
| IPC | H04N5/95, H04N9/89 |

Documentation Searched other than Minimum Documentation
to the Extent that such Documents are Included in the Fields Searched [8]

Jitsuyo Shinan Koho                1971 - 1990
Kokai Jitsuyo Shinan Koho          1971 - 1990

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| X | JP, B1, 51-19939 (Hitachi Denshi, Ltd.), 21 June 1976 (21. 06. 76), (Family: none) | 1 |
| X | JP, U, 51-21523 (Matsushita Electric Ind. Co., Ltd.), 17 February 1976 (17. 02. 76), (Family: none) | 1 |
| X | JP, A, 52-58311 (Hitachi, Ltd.), 13 May 1977 (13. 05. 77), (Family: none) | 1 |
| X | JP, A, 51-4935 (Toshiba Corp.), 16 January 1976 (16. 01. 76), (Family: none) | 1 |
| A | JP, A, 64-86793 (Victor Co. of Japan, Ltd.), 31 March 1989 (31. 03. 89), (Family: none) | 1 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 14, 1990 (14. 09. 90) | October 1, 1990 (01. 10. 90) |

| International Searching Authority | Signature of Authorized Officer |
|---|---|
| Japanese Patent Office | |

Form PCT/ISA/210 (second sheet) (January 1985)